# EUROPEAN PATENT APPLICATION

(11) **EP 3 547 614 A1**
(43) Date of publication of application: **02.10.2019**
(21) Application number: 19156853.4
(22) Date of filing: 13.02.2019
(51) Int. Cl.: H04L 12/24, G05B 19/05, G05B 23/02, G06F 11/30

(54) **MANAGEMENT DEVICE, MANAGEMENT METHOD, MANAGEMENT PROGRAM, AND RECORDING MEDIUM**

(30) Priority: 26.03.2018 JP 2018058248
(71) Applicant: OMRON Corporation, Shiokoji-dori, Shimogyo-Ku Kyoto-shi Kyoto 600-8530 (JP)
(72) Inventor: MIHARA, Yoshihiro, KYOTO, 600-8530 (JP); IKEO, Yuji, KYOTO, 600-8530 (JP); SAWADA, Shigenori, KYOTO, 600-8530 (JP); MANOME, Tomonori, Tokyo 108-0075, (JP)
(74) Representative: 2K Patentanwälte Blasberg Kewitz & Reichel

(57) **Abstract**

A management device capable of facilitating an operation of analyzing an event that has occurred in a node is provided. A management device is a management device that manages a network that includes one or more nodes that record occurrence of a predetermined event and includes: an event log acquisition unit that acquires event logs that associate occurrence times of the event and information that specifies the event from the nodes; and a network configuration diagram display unit that displays a network configuration diagram indicating a connection relationship of the nodes, and the network configuration diagram display unit displays the node in which the event has occurred to be distinguishable from the node in which the event has not occurred in the network configuration diagram.

## Description

### BACKGROUND

### Technical Field

The present invention relates to a management device, a management method, and a management program for managing a network that includes nodes such as a master device and slave devices.

### Description of Related Art

In factory automation (FA), production facilities that are placed in a factory are controlled by an industrial network system that is configured of nodes such as various slave devices that collect data and control the production facilities and a master device that concentrically manages the plurality of slave devices.

Abnormalities related to network communication frequently occur as problems in a production line of a factory, and it takes a long time to recover from such abnormalities. Upon recovery, histories (event logs) of events that have occurred in the nodes are collected, and reasons that the abnormalities have occurred are identified/analyzed on the basis of the collected event logs for the purpose of preventing recurrence. Patent Document 1 discloses a technology of displaying a list of event logs (history information) on an operator console and further narrowing down displayed items in accordance with set conditions.

### [Literature Documents]

### [Patent Document]

[Patent Document 1] Japanese Patent Application Laid-open No. 2002-142895

### SUMMARY

### [Problems to be solved]

In an industrial network system, five or six communication abnormalities occur as events that occur in nodes only by a single cable for connecting the nodes being pulled out, for example. Therefore, a large number (for example, several thousands) of event logs are recorded in a short period in the industrial network system that has many nodes. Therefore, there is a problem that event logs in units of several tens or several hundreds remain even if event logs to be displayed are narrowed down into event logs that have occurred in a predetermined period using the technology described in Patent Document 1, and it takes a significantly long time to perform operations of identifying/analyzing reasons that the abnormalities have occurred.

The invention was made in order to solve the aforementioned problems, and an object thereof is to provide a management device or the like capable of facilitating an operation of analyzing an event that has occurred in a node.

### [Means to Solve Problems]

In order to solve the aforementioned problems, a management device that manages a network including one or more nodes that record occurrence of a predetermined event according to the invention includes: an event log acquisition unit that acquires event logs that associate occurrence times of an event with information that identifies the event from nodes; and a network configuration diagram display unit that displays a network configuration diagram indicating a connection relationship of the nodes, and the network configuration diagram display unit displays a node in which the event has occurred to be distinguishable from nodes in which the event has not occurred in the network configuration diagram.

In addition, it is preferable that the management device include a first event log selection unit that selects an event log related to an event that has occurred in a predetermined period from the event log, and that the network configuration diagram display unit display a node in which an event that is included in the event log selected by the first event log selection unit has occurred to be distinguishable from nodes in which the event has not occurred.

Also, it is preferable thatthe management device include a second event log selection unit that selects an event log related to an event of a communication abnormality from the event log, and that the network configuration diagram display unitdisplay a node in which an event that is included in the event log selected by the second event log selection unit has occurred to be distinguishable from nodes in which the event has not occurred.

Also, it is preferable thatthe management device include an information display unit that displays information related to the event that has occurred in the node in response to a predetermined operation performed on the node that is displayed such that the node is able to be distinguished.

Also, it is preferable thatthe management device include an event log display unit that displays a list of the event logs.

Also, it is preferable thatthe nodes include a master device and slave devices that are connected to the master device in the management device.

A management method according to the invention is a management method for managing a network that includes one or more nodes that record occurrence of a predetermined event, the method including: acquiring event logs that associate occurrence times of the event and information that identifies the event from the one or more nodes that record occurrence of the predetermined event; and displaying a network configuration diagram that indicates a connection relationship of the nodes, and in the displaying of the network configuration diagram, a node in which the event has occurred is displayed to be distinguishable from nodes in which the event has not occurred in the network configuration diagram.

Also, a management program for causing a computer to function as the management device that is a management program for causing the computer to function as the event log acquisition unit and the network configuration diagram display unit and a computer-readable recording medium that records the management program also belong to the technical scope of the invention.

### [Effect]

According to the invention, it is possible to provide a management device or the like capable of facilitating an operation of analyzing an event that has occurred in a node.

### BRIEF DESCRIPTION OF THE DRAWINGS

Embodiments will now be described, by way of example only, with reference to the accompanying drawings which are meant to be exemplary, not limiting, and wherein like elements are numbered alike in several figures, in which:
FIG. 1 is a block diagram illustrating an outline configuration of an industrial network system according to an embodiment of the invention;
FIG. 2 illustrates an example of a display screen of event logs;
FIG. 3 is a diagram for describing narrowing-down of the event logs based on a period;
FIG. 4 is a diagram for describing a command for displaying a network configuration diagram;
FIG. 5 illustrates an example of the network configuration diagram;
FIG. 6 is a diagram illustrating a state in which detailed information related to events that have occurred in a certain node is displayed as a tooltip in the network configuration diagram;
FIG. 7 is a flowchart illustrating a flow of processing in a management method according to an embodiment of the invention;

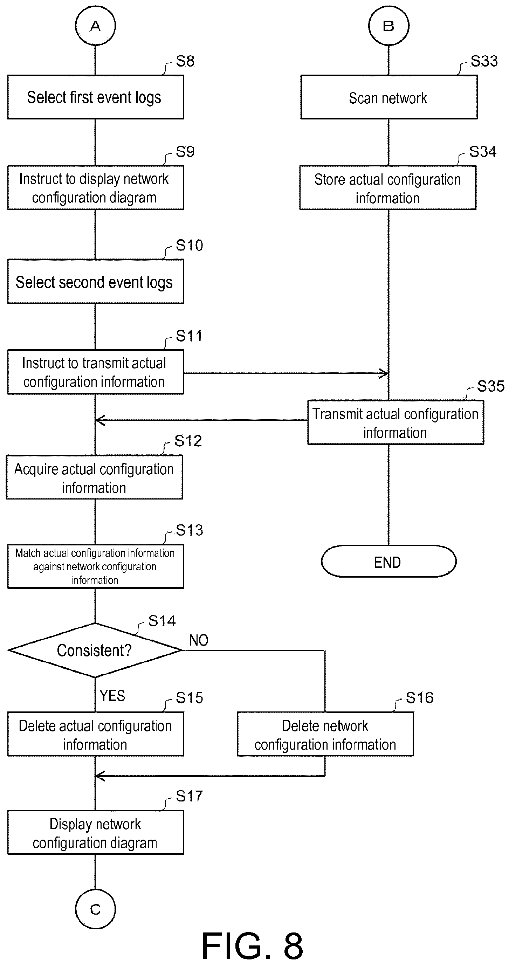

FIG. 8 is a flowchart illustrating a flow of processing in the management method according to the embodiment of the invention; and

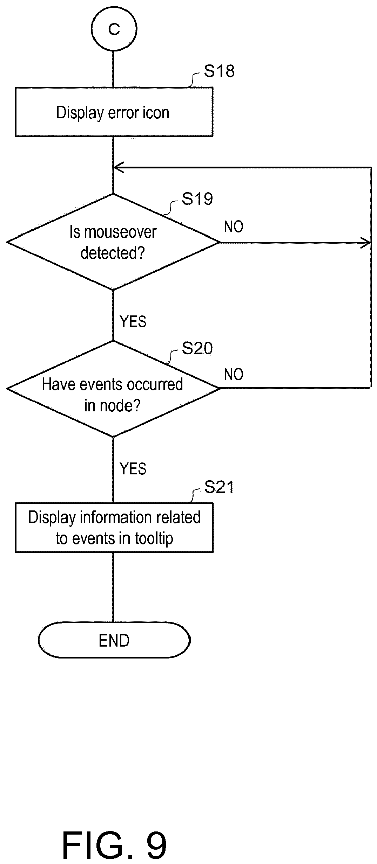

FIG. 9 is a flowchart illustrating a flow of processing in the management method according to the embodiment of the invention.

### DESCRIPTION OF THE EMBODIMENTS

Hereinafter, an embodiment of the invention will be described with reference to accompanying drawings. Although a management device in a network system that follows Ethernet for Control Automation Technology (EtherCAT: registered trademark) will be described in the following embodiment, targets of the invention are not limited thereto. The invention can be applied to any network system as long as the network system includes one or more nodes.

### (Overall configuration of system)

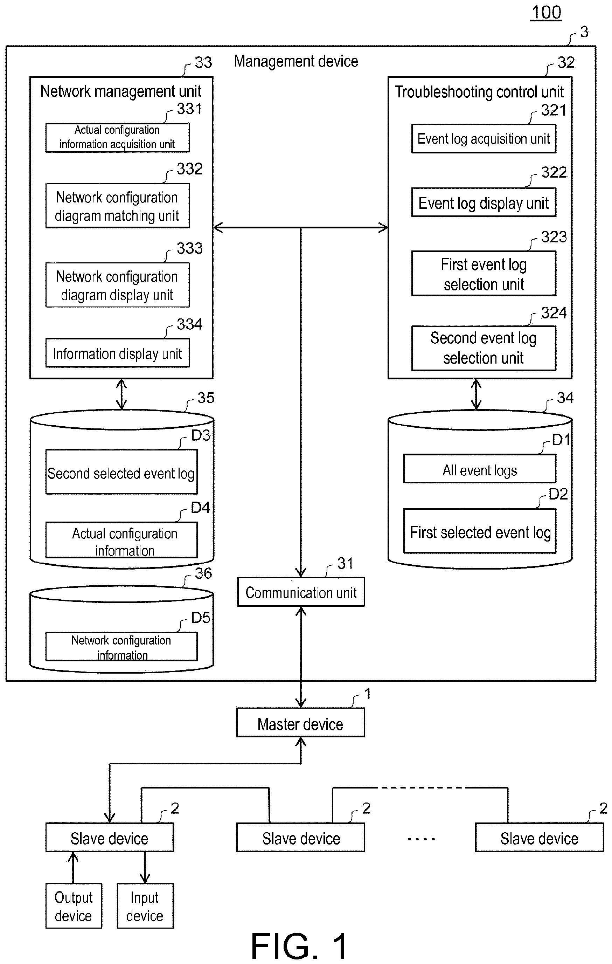

FIG. 1 is a block diagram illustrating an outline configuration of an industrial network system 100 according to an embodiment of the invention. The industrial network system 100 includes a network that includes a master device 1 and slave devices 2 connected to the master device 1, and a management device 3 connected to the master device 1. The master device 1 and the slave devices 2 are connected to each other with cables that are compatible with EtherCAT communication, and the slave devices 2 are also connected to each other with cables that are compatible with EtherCAT communication. The master device 1 and the management device 3 are connected to each other with wired or wireless EtherNET (registered trademark) communication or USB communication.

The master device 1 is a device that concentratively manages the slave devices 2 and is configured of a programmable logic controller (PLC), for example. The master device 1 controls the slave devices 2 by transmitting control commands for performing sequence control to the slave devices 2 and performs state monitoring of the slave devices 2 by receiving various kinds of data from the slave devices 2.

In addition, the master device 1 records event logs that associate occurrence times of a predetermined event (the event) with information that identifies the event in a built-in non-volatile memory every time the event occurs in the device itself. Events according to the embodiment are classified into system events related to abnormalities such as communication problems and access events that occur due to user's operations.

The slave devices 2 are devices that perform data collection and control of production facilities, and perform operations of controlling production facilities in accordance with control commands from the master device 1 and the rewriting and return of the received control commands. The slave devices 2 include slave terminals, NX units, CJ units, IO-Link devices, power source units, motor units, counter units, image units, communication units, I/O units, and the like. The slave devices 2 are appropriately connected to the production facilities in a wired or wireless manner. The production facilities include input devices such as sensors, press buttons, and limit switches and output devices such as lamps.

The slave devices 2 record event logs that associate occurrence times of a predetermined event and information that identifies the event in a built-in non-volatile memory every time the event occurs in the device itself, similarly to the master device 1.

Note that the number of slave devices 2 that can be connected to the master device 1 and the topology thereof are not particularly limited. In the embodiment, a maximum of 512 slave devices 2 can be connected to a single master device 1, and all kinds of topologies such as a serial shape, a ring shape, a tree shape, and a star shape can be applied in accordance with cooperation between the slave deices 2 and convenience of wiring. Also, a hub device may be included as a node in addition to the master device 1 and the slave devices 2.

### (Management device)

The management device 3 is a computer that manages the network of the master device 1 and the slave devices 2 and is configured of a general-purposed personal computer, for example. The management device 3 includes, as hardware configurations, a central processing unit (CPU), a main storage device (memory), an auxiliary storage device (a hard disk, an SDD, or the like), a display device, and an input device (a keyboard, a mouse, or the like), for example.

In addition, the management device 3 includes, as functional blocks, a communication unit 31, a troubleshooting control unit 32, a network management unit 33, a troubleshooting storage unit 34, a network management storage unit 35, and an auxiliary storage unit 36. The communication unit 31, the troubleshooting control unit 32, and the network management unit 33 are realized by a management program (not illustrated) that is stored in the auxiliary storage device being read by the main storage device and executed by the CPU. The management program may be recorded in a non-transitory computer-readable recording medium such as a CD-ROM and may be installed in the management device 3 by causing the management device 3 to read the recording medium. Alternatively, codes of the management program may be downloaded in the management device 3 via a communication network such as the Internet.

The storage unit 34 and the storage unit 35 can be set as main storage devices. Also, the auxiliary storage unit 36 can be set as an auxiliary storage device.

The communication unit 31 is a communication unit for the management device 3 to communicate with the master device 1. For example, the communication unit 31 has a function of switching communication protocols in accordance with the master device 1, a function of constantly monitoring abnormalities that occur in the nodes, and a function of performing transmission and reception processing for acquiring event logs from the respective nodes.

The troubleshooting control unit 32 has a function of assisting with resolution of various problems in the network that includes the master device 1 and the slave devices 2. In order to realize this function, the troubleshooting control unit 32 includes an event log acquisition unit 321, an event log display unit 322, a first event log selection unit 323, and a second event log selection unit 324.

The event log acquisition unit 321 is a functional block that acquires event logs from the respective nodes such as the master device 1 and the slave devices 2. As described above, the respective nodes such as the master device 1 and the slave devices 2 record event logs that associate occurrence times of events that have occurred in the devices themselves and information that identifies the events. The event log acquisition unit 321 can acquire the event logs from all the nodes that are connected directly or indirectly to the management device 3 by the user activating the control program and performing a predetermined operation (for example, pressing a troubleshooting button). The acquired event logs are stored as a total event log D1 in the storage unit 34.

It is noted that although the event log acquisition unit 321 may acquire all the event logs that are recorded in the slave devices 2 in the embodiment, the event log acquisition unit 321 may employ a configuration in which the event log acquisition unit 321 does not acquire all the event logs since the event logs that are recorded in slave terminals, NX units, CJ units, and IO-Link devices are not event logs related to communication abnormalities, which will be described later. Also, the event log acquisition unit 321 may acquire event logs with occurrence sources of an "EtherCAT master function module" from among event logs that are stored in the master device 1.

The event log display unit 322 is a functional block that displays a list of the event logs on a display device. In the embodiment, the event log acquisition unit 321 acquires the event logs from the respective nodes, and the event log display unit 322 then automatically displays the list of all the acquired event logs.

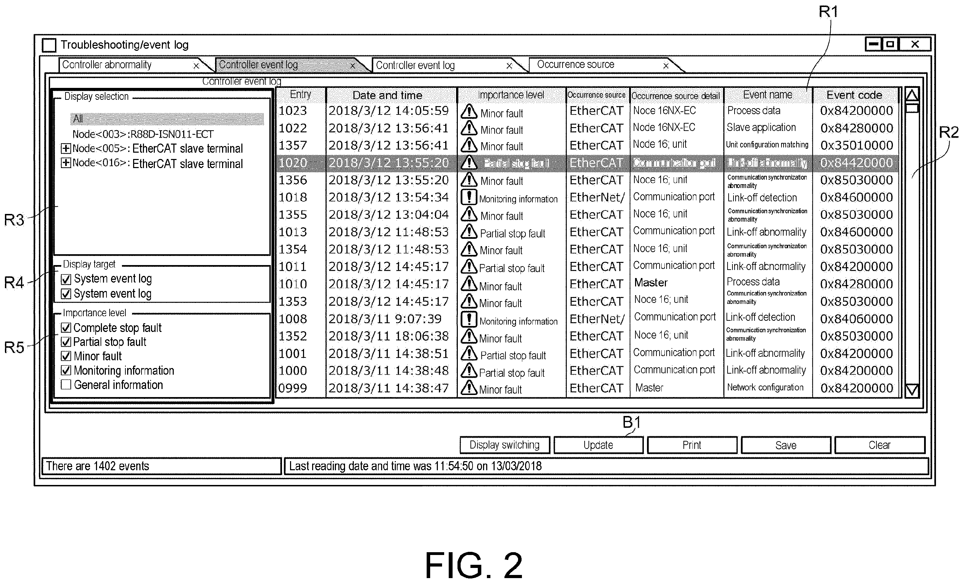

FIG. 2 illustrates an example of a display screen of the event logs. In FIG. 2, a list of the event logs is displayed in chronological order in the region R1, and the event logs include entries, dates and times, importance levels, occurrence sources, occurrence source details, event names, and event codes.

The dates and times are occurrence times of events in the respective nodes. Although the occurrence times are expressed in years, months, dates, hours, minutes, and seconds in the embodiment, a display form of the occurrence times is not limited thereto.

The entries, the importance levels, the occurrence sources, the occurrence source details, the event names, and the event codes are information that identifies the events. Specifically, the entries are I/O data assigned in I/O entry mapping. The importance levels are information that indicates importance levels of the events that the respective nodes have detected, and a higher importance level indicates a greater influence on the system and a greater recovery emergency level. The occurrence sources are information that indicates nodes from which occurrence of events have been detected, and the occurrence source details are information (IDs and the like) for specifying the nodes in which the events have occurred. The event names are types of the events. The event codes are codes that the system has assigned to the events in advance in accordance with types of the events and are represented by eight hexadecimal digits. It is noted that the information that identifies the events is not limited thereto.

Although some of 1402 event logs are displayed in FIG. 2, the user can view all the event logs by operating the scroll bar R2 on the right side of the region R1. However, since it takes a long time to verify the event logs when there are a large number of event logs, the first event log selection unit 323 can narrow down the event logs in accordance with filtering conditions set by the user in the embodiment.

Menus for setting the filtering conditions are displayed in regions R3 to R5 in FIG. 2. The user can narrow down the event logs to be displayed in the region R1 by pressing the update button B1 after selecting these menus.

A menu for selecting a range of nodes to be displayed in the list of the event logs is displayed in the region R3. The user can select if only the master device 1 and the slave devices 2 are to be displayed or if the slave terminals connected to the slave devices 2 are also to be displayed in the list.

A menu for narrowing down targets to be displayed in the list in accordance with the types of the event logs is displayed in the region R4. The user can select system event logs and/or access event logs.

In addition, a menu for narrowing down targets to be displayed in the list in accordance with the importance levels of the event logs is displayed in the region R5. A complete stop fault is an abnormality due to which it becomes impossible to control an entire node, a partial stop fault is an abnormality due to which it becomes impossible to control an entire function module of a node, and a minor fault is an abnormality due to which it becomes impossible to perform or continue control operations within a scope of a function module of a node. Monitoring information is information that is recorded in each event log and is provided as a notification to the user for the purpose of encouraging the user to pay attention to an abnormality that is a minor level abnormality that does not affect control in order for the abnormality not to advance to an abnormality of the minor fault level or a more serious level. General information is information that does not indicate occurrence of an abnormality but is recorded in each event log and is provided as a notification to the user.

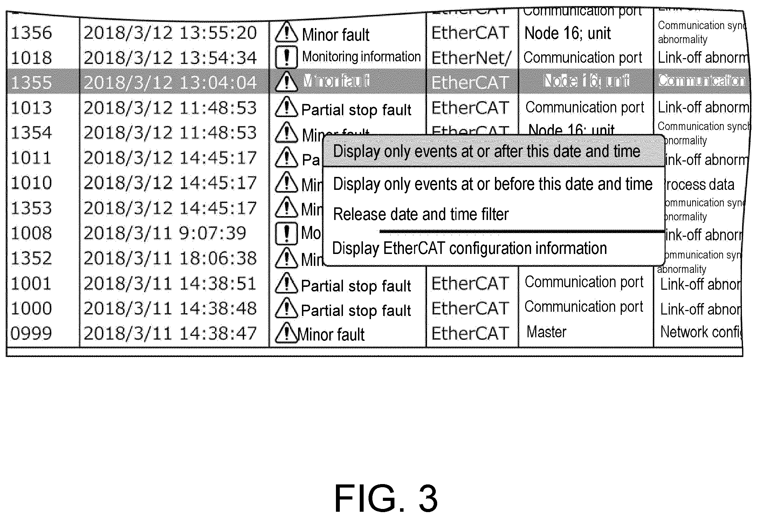

Further, the first event log selection unit 323 can narrow down the event logs into event logs related to events that have occurred in a predetermined period in addition to the narrowing down of the event logs as described above in the embodiment. Specifically, a context menu is displayed on the lower side by selecting an event log that serves as a starting period of the predetermined period and performing right clicking in the list of the event logs as illustrated in FIG. 3. It is possible to narrow down the event logs only into event logs that have occurred later than the occurrence time of a selected event log by selecting "display only events at or after this date and time" from the context menu. Similarly, it is possible to narrow down the event logs only into event logs that have occurred earlier than the occurrence time of a selected event log by selecting the event log that serves as an end point of the predetermined period, performing right clicking, and selecting "display only events at or before this date and time" from the context menu. It is noted that if "release date and time filter" is selected from the context menu after the event logs are narrowed down, it is possible to display all the event logs again.

The first event log selection unit 323 stores the event logs selected from all event logs D1 as first selected event logs D2 in the storage unit 34. In this manner, the event log display unit 322 displays a list of the selected event logs on the basis of the first selected event logs D2. As a result, the event logs related to events that have occurred in a predetermined period are displayed in the list of the event logs.

The second event log selection unit 324 is a functional block that selects event logs related to events of communication abnormalities from the event logs (all event logs D1 or the first selected event logs D2). The events related to communication abnormalities are mostly system event logs of minor faults. The selection of the event logs performed by the second event log selection unit 324 is performed when the user provides a command for displaying a network configuration diagram as will be described later, and the selected event logs are stored as second selected event logs D3 in the storage unit 35.

The network management unit 33 has a function of assisting network state management performed by the user. In order to realize the function, the network management unit 33 includes an actual configuration information acquisition unit 331, a network configuration diagram matching unit 332, a network configuration diagram display unit 333, and an information display unit 334.

The actual configuration information acquisition unit 331 is a functional block that acquires information of a network configuration of actual devices (actual configuration information). In the embodiment, information of the respective slave devices 2 are collected, and the actual configuration information is generated by the master device 1 performing network scanning processing in the actually constructed industrial network system 100. The actual configuration information acquisition unit 331 receives the actual configuration information from the master device 1 and reads the actual configuration information as actual configuration information D4 illustrated in FIG. 1 in the storage unit 35.

In addition, network configuration information D5 indicating a network configuration of design created by the user is stored in advance as a project file in the auxiliary storage unit 36. After the control program is activated, the network configuration diagram matching unit 332 reads the network configuration information D5 in the storage unit 35 and matches the network configuration information D5 against the actual configuration information D4. In a case in which both the network configuration information D5 and the actual configuration information D4 coincide with each other as a result of the matching, the network configuration diagram matching unit 332 deletes the actual configuration information D4 from the storage unit 35 and stores only the network configuration information D5 in the storage unit 35. Meanwhile, in a case in which both the network configuration information D5 and the actual configuration information D4 do not coincide with each other as a result of the matching, the network configuration diagram matching unit 332 deletes the network configuration information D5 from the storage unit 35, rewrites the network configuration information D5 stored in the auxiliary storage unit 36 with the actual configuration information D4, and saves the actual configuration information D4. In this manner, either the actual configuration information D4 or the network configuration information D5 remains in the storage unit 35.

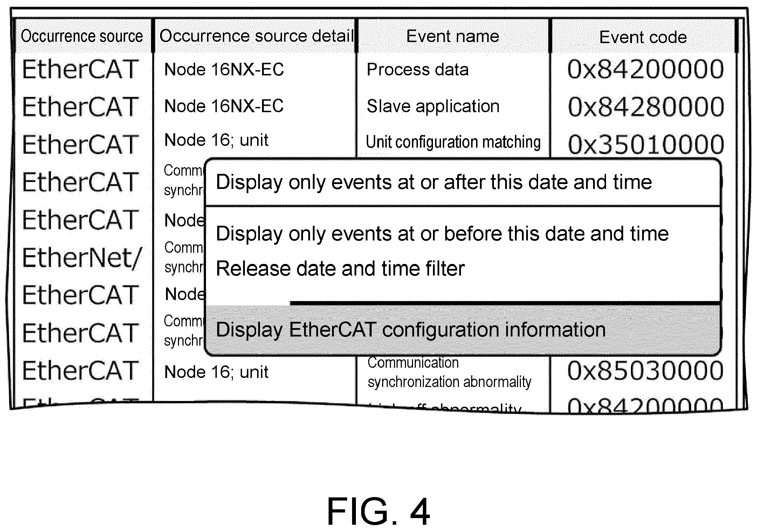

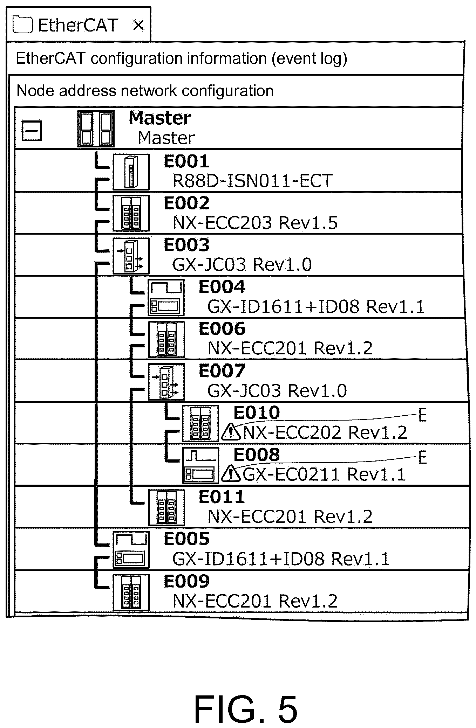

The network configuration diagram display unit 333 is a functional block that displays a network configuration diagram indicating a connection relationship of the nodes. In the embodiment, the user can provide a command for displaying the network configuration diagram by performing right clicking in the list of the event logs and selecting "display EtherCAT configuration information" from the context menu as illustrated in FIG. 4. In response to this command, the network configuration diagram display unit 333 refers to the actual configuration information D4 or the network configuration information D5 stored in the storage unit 35 and graphically displays the network configuration diagram illustrated in FIG. 5. In The network configuration diagram, all the nodes included in the network are represented as icons, and the icons are displayed in the form of a tree. In addition, node addresses and model names are displayed in the vicinity of the respective icons.

It is noted that the specific display mode of the network configuration diagram is not limited thereto, and any display mode can be employed as long as the user can intuitively recognize the network configuration.

In addition, the network configuration diagram display unit 333 can refer to the second selected event log D3 and can display nodes in which an event has occurred such that the node can be distinguished from nodes in which the event has not occurred in the network configuration diagram when the user provides a command for displaying the network configuration diagram. In the network configuration diagram illustrated in FIG. 5, error icons E are displayed in the vicinity of the respective nodes with node addresses E010 and E008. In this manner, the user can easily recognize that events have occurred in the nodes in the vicinity of which the error icons E are displayed. Therefore, utilization of the management device 3 according to the embodiment facilitates the operations of analyzing the events that have occurred in the nodes.

In addition, since it takes a time to achieve recovery from communication abnormalities from among events that may occur in the slave devices 2, the communication abnormalities are important as targets of analyzing reasons of occurrence. Thus, the second event log selection unit 324 selects the event logs such that the second selected event logs D3 include only event logs related to events of communication abnormalities in the embodiment. In this manner, the user can easily recognize the nodes in which the communication abnormalities have occurred in a predetermined period on the basis of the network configuration diagram, and it is possible to improve efficiency of verification operations based on the event logs.

It is noted that the display mode of the node in which the event has occurred such that the node can be distinguished from the other nodes in the network configuration diagram is not limited to the aforementioned display mode. For example, a mode in which a corresponding icon is displayed in a blinking manner or with emphasis can be applied.

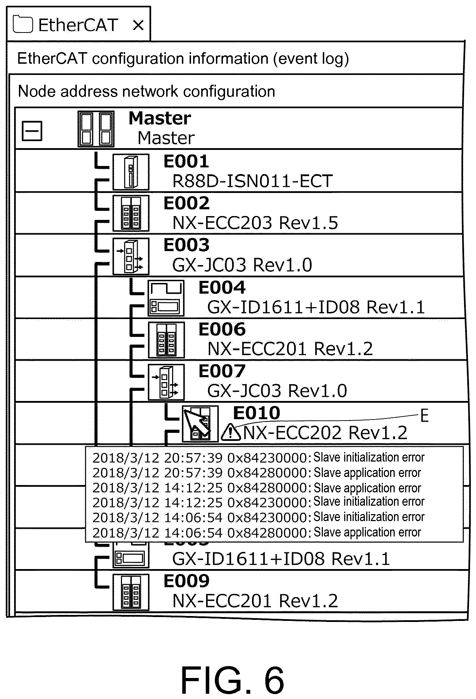

The information display unit 334 is a functional block that displays information related to an event that has occurred in a node in response to a predetermined operation performed on the node that is displayed to be distinguishable in the network configuration diagram. If a mouse over occurs on an icon of the node with the node address E010 on which the error icon E is displayed as illustrated in FIG. 6, for example, the information display unit 334 acquires event logs of the node corresponding to the mouse-over icon from the second selected event log D3 and displays as a tooltip detailed information (a list of dates and times, event codes, and event names) related to events that have occurred in the node in a predetermined period in a clock time order. In this manner, the user can recognize what kinds of events have been occurred in each node with a simple operation. Therefore, it becomes much easier to perform the operation of analyzing the events that have occurred in the node.

It is noted that the predetermined operation performed on the node is not particularly limited as long as the operation is for selecting a desired node, and clicking, tapping, or the like of the node may be performed, for example.

### (Management method)

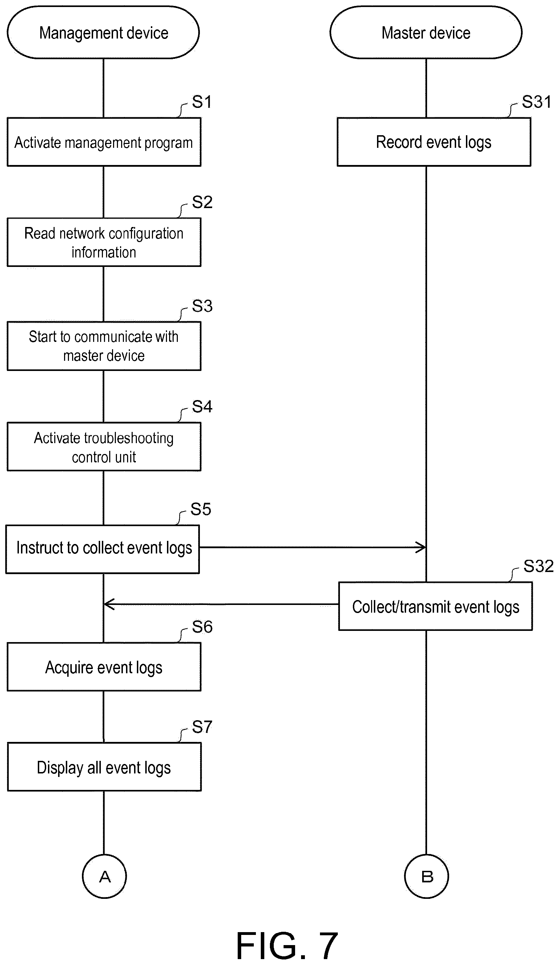

FIG. 7 is a flowchart illustrating a flow of processing in the management method for managing the network that includes the master device 1 and the slave devices 2. In the drawing, a processing procedure of the management device 3 and the master device 1 is illustrated. First, if the user activates the management program on the management device 3 and opens a project file (S1), the work management unit 33 is activated, and the network configuration diagram matching unit 332 reads the network configuration information D5, which is stored in the auxiliary storage unit 36, in the storage unit 35 (S2). Then, if the user presses an online button (not illustrated) on the screen of the management program, the communication unit 31 starts to communicate with the master device 1 (S3).

Meanwhile, the master device 1 records event logs every time a predetermined event occurs in the device itself (S31). Although not illustrated in the flowchart, each slave device 2 also records event logs in a similar manner.

If the user presses a troubleshooting button (not illustrated) on the screen of the management program on the management device 3, the troubleshooting control unit 32 is activated (S4). Thereafter, the event log acquisition unit 321 instructs to collect event logs to the master device 1 and the slave devices 2 (S5). In response to the command, the master device 1 and the slave devices 2 transmit the event logs that are recorded in the devices themselves to the management device 3. In this manner, the event log acquisition unit 321 acquires the event logs and stores the event logs as all event logs D1 in the storage unit 34 (S6; event log acquisition step). Thereafter, the event log display unit 322 displays a list of all the acquired event logs on the basis of the all event logs D1 (S7).

Thereafter, the first event log selection unit 323 selects event logs in accordance with filtering conditions set by the user and stores the event logs as the first selected event logs D2 in the storage unit 34 (S8). In particular, it is possible to narrow down the event logs into event logs related to the events that have occurred in a predetermined period in the embodiment.

Meanwhile, the master device 1 can collect information of the respective slave devices 2 by performing network scanning processing (S33) and store actual configuration information in the devices themselves (S34). It is noted that the processing in S33 and S34 can be performed at arbitrary timings.

If the management device 3 instructs to display a network configuration diagram by the user after the event logs are narrowed down (S9), the second event log selection unit 324 selects event logs related to events of communication abnormalities from the first selected event logs D2 stored in the storage unit 34 and provides a notification to the network management unit 33. In the embodiment, the second event log selection unit 324 selects event logs that have occurred from EtherCAT, which is an occurrence source, and that are in an importance level of minor faults. The selected event logs are stored as second selected event logs D3 in the storage unit 35 (S10).

Then, the actual configuration information acquisition unit 331 instructs to transmit the actual configuration information to the master device 1 (S11). In response to this, the master 1 transmits the actual configuration information that is stored in the device itself to the management device 3 (S35). In this manner, the actual configuration information acquisition unit 331 acquires the actual configuration information D4 and stores the actual configuration information D4 in the storage unit 35 (S12).

Thereafter, the network configuration diagram matching unit 332 matches the actual configuration information D4 against the network configuration information D5 read in the storage unit 35 in S2 (S13). In a case in which both the actual configuration information D4 and the network configuration information D5 coincide with each other (YES in S14) as a result of the matching, the network configuration diagram matching unit 332 deletes the actual configuration information D4 from the storage unit 35 (S15). Meanwhile, in a case in which both the actual configuration information D4 and the network configuration information D5 do not coincide with each other (NO in S14), the network configuration diagram matching unit 332 deletes the network configuration information D5 from the storage unit 35 (S16). Thereafter, the network configuration diagram display unit 333 displays the network configuration diagram on the basis of the actual configuration information D4 or the network configuration information D5 remaining in the storage unit 35 (S17; network configuration diagram display step).

Further, the network configuration diagram display unit 333 refers to the second selected event logs D3 stored in the storage unit 35 and displays error icons in the vicinity of icons of nodes, in which events have occurred, on the network configuration diagram (S18). Thereafter, in a case in which a mouse over occurs on an icon of a node in which events have occurred (YES in S19 and S20), the information display unit 334 acquires event logs of the node corresponding to the mouse-over icon from the second selected event logs D3 and displays as a tooltip detailed information related to events of communication abnormalities that have occurred in the node in a predetermined period (S21).

### (Supplementary note)

Although the embodiment of the invention has been described above, the invention is not limited to the aforementioned embodiment, various modifications can be made without departing from the gist thereof, and for example, modes that can be obtained by appropriately combining technical means disclosed in the aforementioned embodiment also belong to the technical scope of the invention.

In addition, the event log display unit 322 displays all the acquired event logs after the event log acquisition unit 321 illustrated in FIG. 1 acquires the event logs from the respective nodes, and displays the network configuration diagram after the user narrows down the event logs in the aforementioned embodiment. However, the invention is not limited thereto, and a mode in which the network configuration diagram is displayed without narrowing down the event logs or a mode in which the network configuration diagram is displayed without performing the display of the event logs by the event log display unit 322 may be employed. That is, at least any of the event log display unit 322, the first event log selection unit 323, and the second event log selection unit 324 may be omitted. Since the node in which events have occurred is displayed to be distinguishable from the other nodes on the network configuration diagram even in such modes, it is possible to facilitate the operation of analyzing the events.

In addition, although the configuration in which the actual configuration information D4 acquired from the master device 1 is matched against the network configuration information D5 before the network configuration diagram is displayed and the network configuration diagram is displayed on the basis of the actual configuration information D4 or the network configuration information D5 is employed in the aforementioned embodiment, the invention is not limited thereto. For example, the network configuration diagram may be displayed on the basis of the network configuration information D5 stored in the auxiliary storage unit 36 without performing the aforementioned matching. Alternatively, the actual configuration information D4 may be acquired from the master device 1 every time the network configuration diagram is to be displayed, and the network configuration diagram may be displayed on the basis of the acquired actual configuration information D4.

### [Reference Signs List]

1 Master device (node)
2 Slave device (node)
3 Management device
31 Communication unit
32 Troubleshooting control unit
321 Event log acquisition unit
322 Event log display unit
323 First event log selection unit
324 Second event log selection unit
33 Network management unit
331 Actual configuration information acquisition unit
332 Network configuration diagram matching unit
333 Network configuration diagram display unit
334 Information display unit
34 Storage unit
35 Storage unit
36 Auxiliary storage unit
100 Industrial network system
B1 Update button
D1 All event logs
D2 First selected event log
D3 Second selected event log
D4 Actual configuration information
D5 Network configuration information
E Error icon
R1 Region
R2 Scroll bar
R3 Region
R4 Region
R5 Region

## Claims

1. A management device (3) that manages a network including one or more nodes (1, 2) that record occurrence of a predetermined event, **characterized in that**, the management device (3) comprises:
an event log acquisition unit (321) that acquires event logs that associate occurrence times of the event with information that identifies the event from the nodes (1, 2); and
a network configuration diagram display unit (333) that displays a network configuration diagram indicating a connection relationship of the nodes (1, 2),
wherein the network configuration diagram display unit (333) displays a node (1, 2) in which the event has occurred to be distinguishable from nodes (1, 2) in which the event has not occurred in the network configuration diagram.

2. The management device (3) according to claim 1, comprising:
a first event log selection unit (323) that selects an event log related to an event that has occurred in a predetermined period from the event log,
wherein the network configuration diagram display unit (333) displays a node (1, 2) in which an event included in the event log selected by the first event log selection unit (323) has occurred to be distinguishable from nodes (1, 2) in which the event has not occurred.

3. The management device (3) according to claim 1 or 2, comprising:
a second event log selection unit (324) that selects an event log related to an event of a communication abnormality from the event log,
wherein the network configuration diagram display unit (333) displays a node (1, 2) in which an event that is included in the event log selected by the second event log selection unit (324) has occurred to be distinguishable from nodes (1, 2) in which the event has not occurred.

4. The management device (3) according to any one of claims 1 to 3, comprising:
an information display unit (334) that displays information related to the event that has occurred in the node (1, 2) in response to a predetermined operation performed on the node (1, 2) that is displayed to be distinguishable.

5. The management device (3) according to any one of claims 1 to 4, comprising:
an event log display unit (322) that displays a list of the event logs.

6. The management device (3) according to any one of claims 1 to 5, wherein the nodes (1, 2) include a master device (1) and slave devices (2) that are connected to the master device (1).

7. A management method for managing a network including one or more nodes (1, 2) that record occurrence of a predetermined event, **characterized in that**, the method comprises:
acquiring event logs that associate occurrence times of the event and information that identifies the event from the one or more nodes (1, 2) that record occurrence of the predetermined event; and
displaying a network configuration diagram that indicates a connection relationship of the nodes (1, 2),
wherein, in the displaying of the network configuration diagram, a node (1, 2) in which the event has occurred is displayed to be distinguishable from nodes (1, 2) in which the event has not occurred in the network configuration diagram.

8. A management program, **characterized in that**, the management program causes a computer to function as the management device (3) according to claim 1, and causes the computer to function as the event log acquisition unit (321) and the network configuration diagram display unit (333).

9. A non-transitory computer-readable recording medium, **characterized in that**, the recording medium records the management program according to claim 8.
